**Europäisches Patentamt**

(19) **European Patent Office**

**Office européen des brevets**

(11) Numéro de publication: **0 084 340**
**B1**

(12) # FASCICULE DE BREVET EUROPÉEN

(45) Date de publication du fascicule du brevet:
24.09.86

(21) Numéro de dépôt: **83100163.1**

(22) Date de dépôt: **11.01.83**

(51) Int. Cl.⁴: **H 01 S 3/03,** H 01 S 3/04, H 01 S 3/097

(54) **Laser à gaz excité par décharge de condensateurs.**

(30) Priorité: **14.01.82 FR 8200526**

(43) Date de publication de la demande:
**27.07.83 Bulletin 83/30**

(45) Mention de la délivrance du brevet:
**24.09.86 Bulletin 86/39**

(84) Etats contractants désignés:
**BE CH DE FR GB IT LI NL SE**

(56) Documents cité:
**EP-A-0 048 407**
**WO-A-80/01439**
**US-A-3 787 781**

(73) Titulaire: **COMPAGNIE GENERALE D'ELECTRICITE Société anonyme dite:, 54, rue La Boétie, F-75382 Paris Cedex 08 (FR)**

(72) Inventeur: **Lacour, Bernard, 17, rue des Cornutas, F-91460 Marcoussis (FR)**
Inventeur: **Maillet, Marc, 6, Square du Clos de Villaine, F-91300 Massy (FR)**
Inventeur: **Vannier, Chantal, Le Bois des Roches 1, rue Gounod, F-91240 Saint Michel Sur Orge (FR)**
Inventeur: **de Witte, Olivier, 27, avenue des Roches, F-91190 Gif Sur Yvette (FR)**

(74) Mandataire: **Weinmiller, Jürgen, Zeppelinstrasse 63, D-8000 München 80 (DE)**

## Description

La présente invention concerne un laser à gaz excité par décharge de condensateurs

Par la demande de brevet Européen EP-A-0 058 389 on connaît un laser à gaz de ce type, comportant:

- deux plaques métalliques en regard l'une de l'autre, sensiblement parallèles entre elles,
- deux pièces diélectriques disposées côte à côte entre les deux plaques, ces pièces étant fixées sur les plaques afin de former deux condensateurs en parallèle, l'espace compris entre les pièces et les plaques constituant un canal disposé suivant un axe et contenant un milieu actif, les parties médianes des deux plaques, en contact avec le milieu actif, formant respectivement deux électrodes,
- une cavité optique résonnante disposée suivant l'axe et contenant le milieu actif
- et un circuit de charge comprenant
. un transformateur dont l'enroulement primaire est connecté en série avec une capacité et dont les extrémités de l'enroulement secondaire sont connectées respectivement aux deux plaques,
. une source de courant électrique capable de charger la capacité
. et des moyens pour commander la décharge de la capacité dans l'enroulement primaire, de façon à créer dans l'enroulement secondaire un courant induit capable de charger les condensateurs, afin d'établir une décharge électrique entre les électrodes, cette décharge. excitant le milieu actif gazeux pour former un faisceau laser.

Dans ce laser a gaz, les pièces diélectriques des condensateurs peuvent être constituées par des céramiques piézoélectriques.

La présente invention a pour but d'apporter un perfectionnement a ce laser à gaz, afin d'augmenter sa fiabilité.

Elle a pour objet un laser à gaz excité par décharge de condensateurs comprenant:

- deux plaques métalliques en regard l'une de l'autre, chaque plaque comprenant une partie médiane située entre deux parties extrêmes qui lui sont adjacentes,
- deux éléments diélectriques disposée entre les plaques, respectivement de part et d'autre des parties médianes et en contact avec les parties extrémes, de façon à former avec les plaques deux condensateurs en parallèle, l'espace compris entre les parties médianes et les éléments diélectriques constituant un canal disposé suivant un axe et contenant un milieu actif gazeux, les parties médianes en contact avec le milieu actif formant respectivement deux électrodes,
- une cavité optique résonnante disposée suivant ledit axe et contanant le milieu actif
- et un circuit de charge comportant
. un transformateur dont l'enroulement primaire · est connecté en série-avec une capacité et dont les extrémités de l'enroulement secondaire sont connectées respectivement aux deux plaques,
. une source de courant électrique capable de charger la capacité
. et des moyens pour commander la décharge de la capacité dans l'enroulement primaire, de façon à créer dans l'enroulement secondaire un courant induit capable de charger les condensateurs afin d'établir une décharge électrique entre les électrodes, cette décharge excitant le milieu actif gazeux pour former un faisceau laser, caractérisé en ce que chaque élément diélectrique comporte

- une cloison isolante disposée perpendiculairement aux plaques et entourant l'espace compris entre les parties extrêmes en regard, de façon à former une chambre
- et de l'eau remplissant ladite chambre.

Plusieurs formes particulières d'exécution de l'objet de la présente invention sont décrites ci-dessous, à titre d'exemple, en référence au dessin annexé dans lequel la figure unique représente schématiquement un mode de réalisation du laser à gaz selon l'invention.

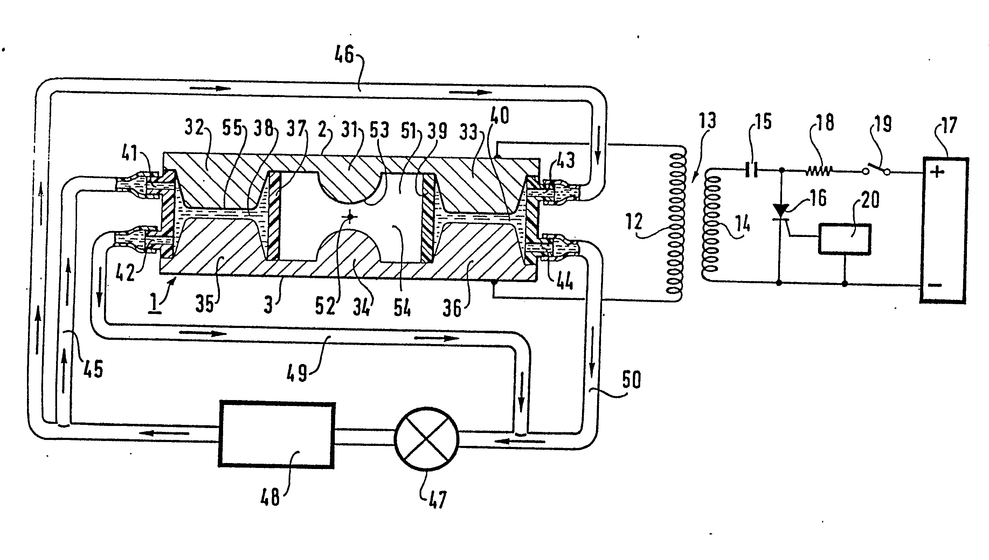

Sur la figure 1, un corps de laser 1, représenté en coupe transversale, comporte deux plaques métalliques rectangulaires 2 et 3, en acier, en regard l'une de l'autre. Les faces de ces plaques, disposées sur la surface extérieure du corps 1, sont sensiblement parallèles entre elles. Chaque plaque comporte une partie médiane située entre deux parties extrêmes adjacentes. La plaque 2 comporte ainsi une partie médiane 31 située entre deux parties extrêmes 32 et 33, et la plaque 3 une partie médiane 34 située entre deux parties extrêmes 35 et 36. Une cloison isolante 37 disposée perpendiculairement aux plaques, entoure l'espace compris entre les parties 32 et 35 des plaques 2 et 3, de façon à créer une chambre 38. De même une cloison isolante 39 disposée perpendiculairement aux plaques entoure l'espace compris entre les parties 33 et 36 des plaques 2 et 3, de façon à créer une chambre 40. Les cloisons 37 et 39 sont, par exemple, réalisées en matière plastique.

Les parties extrêmes 32, 33, 35 et 36 des plaques 2 et 3 comportent de préférence des proéminences aplaties, par exemple la proéminence 55 de la partie 32, qui s'avancent dans le volume de la chambre suivant une surface plane parallèle aux faces extérieures des plaques, de façon que la distance moyenne entre les plaques soit plus faible dans les chambres 38 et 40 qu'entre les parties médianes.

Entre les parties médianes 31 et 34 et les cloisons 37 et 39, est ménagé un canal longitudinal 51 dont l'axe 52 est perpendiculaire au plan de la figure. Les parties médianes 31 et 34 des plaques 2 et 3 comportent chacune une proéminence arrondie telle que 53, suivant une surface cylindrique dont les génératrices sont parallèles à l'axe 52. Ces proéminences arrondies s'avancent dans le canal 51, de façon à former deux électrodes en regard l'une de l'autre.

Une cavité optique résonnante est disposée suivant l'axe 52. Cette cavité peut comporter deux miroirs, tels que 54, fixés par collage aux deux extrémités du canal 51 de façon à l'obturer. Un de ces miroirs est totalement réfléchissant et l'autre partiellement transparent pour laisser passer le rayonnement laser.

Les cloisons 37 et 39 comportent respectivement des ouvertures 41 et 42 d'une part, et 43 et 44 d'autre part, disposées sur la surface extérieure du corps de laser 1.

Les ouvertures 41 et 43 sont raccordées par des canalisations 45 et 46, à l'amont d'un dispositif comprenant une pompe de circulation 47 en série avec un échangeur thermique 48. A l'aval de ce dispositif, aboutissent deux canalisations 49 et 50 reliant le dispositif respectivement aux ouvertures 42 et 44.

Les deux extrémites de l'enroulement secondaire 12 d'un transformateur 13 sont connectées respectivement aux deux plaques métalliques 2 et 3. Une extrémité de l'enroulement primaire 14 du transformateur 13 est connectée à une armature d'une capacité 15 dont l'autre armature est connectée à l'anode d'un thyristor 16, la cathode du thyristor 16 étant connectée à l'autre extrémité de l'enroulement 14. La jonction entre le condensateur 15 et le thyristor 16 est connectée au pôle positif d'un générateur de courant électrique 17, à travers une résistance de charge 18 et un interrupteur 19. Le pôle négatif du générateur 17 est connecté à la cathode du thyristor 16. Les deux sorties d'un circuit de commande 20 sont reliées respectivement à la cathode et à l'électrode de commande du thyristor 16.

Le laser décrit ci-dessus et illustré par la figure fonctionne de la manière suivante.

Le volume interne du canal 51 est rempli d'un gaz actif laser qui peut être par exemple un mélange d'azote et d'hexafluorure de soufre SF6.

Le volume interne des chambres 38 et 40, ainsi que celui du dispositif de circulation et de refroidissement 45 à 50, est rempli d'eau. L'eau contenue dans les chambres 38 et 40 en contact avec les plaques 2 et 3 forme le diélectrique de deux condensateurs branchés en parallèle.

Le thyristor 16 n'étant pas conducteur, on charge la capacité 15 par fermeture de l'interrupteur 19. Puis on déclenche la décharge de la capacité 15 dans l'enroulement 14, en rendant conducteur la thyristor 16 par commande du circuit 20. Cette décharge provoque la formation, dans l'enroulement secondaire 12 du transformateur 13 d'une tension induite qui charge les deux condensateurs à eau branchés en parallèle.

Dès que la tension entre les plaques 2 et 3 atteint la tension d'amorçage entre les électrodes du laser, une décharge d'établit entre ces électrodes, de façon à provoquer la formation d'un rayonnement laser oscillant dans la cavité, ce rayonnement donnant naissance à une impulsion laser sortant du miroir partiellement transparent de la cavité.

On met en marche la pompe 47 de façon à faire circuler l'eau dans les chambres 38 et 40. L'échangeur thermique 48 permet de refroidir l'eau en circulation.

Comme dans le laser à gaz connu cité plus haut, la décharge entre les électrodes est commandée par un circuit qui ne comporte pas d'éclateur. Grâce à la faible impédance de décharge des condensateurs intégrés dans le corps du laser, on obtient une décharge électrique homogène entre les électrodes, bien que le temps de montée de la tension aux bornes des électrodes soit relativement long. Ce résultat a un caractère surprenant compte tenu de l'opinion généralement admise suivant laquelle il est nécessaire que le temps de montée de la tension aux bornes des électrodes soit extrêmement court pour obtenir une décharge homogène dans des lasers à azote ou à excimères. Cette opinion est illustrée par exemple par l'article américain "Necessary conditions for the homogeneous formation of pulsed avalanche discharges at high gas pressures" (J.I. Levatter et al) extrait de "Journal of applied physics" 51 (1), Janvier 1980, pages 210 à 222.

L'utilisation de l'eau comme diélectrique dans les condensateurs du laser selon l'invention offre plusieurs avantages.

Elle permet d'améliorer la fiabilité du laser car le diélectrique constitué par l'eau peut supporter sans dommange d'éventuels claquages.

De plus le fonctionnement du laser à haute cadence de répétition est amélioré lorsque l'eau des condensateurs est refroidie.

Enfin les condensateurs à eau sont particulièrement adaptés à une charge en impulsion d'une durée de 1 à 10 microsecondes qu'il est très facile de réaliser à l'aide du circuit électrique décrit ci-dessus.

La présente invention peut être appliquée notamment à la réalisation de lasers dont le gaz actif comporte de l'azote ou un mélange d'halogènes et de gaz rares.

## Revendications

1/ Laser à gaz excité par décharge de condensateurs, comprenant:
- deux plaques métalliques en regard l'une de l'autre, chaque plaque comprenant une partie médiane située entre deux parties extrêmes qui lui sont adjacentes,
- deux éléments diélectriques disposés entre les plaques, respectivement de part et d'autre des parties médianes et en contact avec les parties extrémes, de façon à former avec les plaques deux condensateure en parallèle, l'espace compris entre les parties médianes et les éléments diélectriques constituant un canal (51) disposé suivant un axe et contenant un milieu actif gazeux, les parties médianes en contact avec le milieu actif formant respectivement deux électrodes,
- une cavité optique résonnante disposée suivant ledit axe et contenant le milieu actif

- et un circuit de charge comportant
- un transformateur dont l'enroulement primaire est connecté en série avec une capacité et dont les extrémités de l'enroulement secondaire sont connectées respectivement aux deux plaques,
- une source de courant électrique capable de charger la capacité
- et des moyens pour commander la décharge de la capacité dans l'enroulement primaire, de façon à créer dans l'enroulement secondaire un courant induit capable de charger les condensateurs afin d'établir une décharge électrique entre les électrodes, cette décharge excitant le milieu actif gazeux pour former un faisceau laser, caractérisé en ce que chaque élément diélectrique comporte
- une cloison isolante (37, 39), disposée perpendiculairement aux plaques (2, 3) et entourant l'espace compris entre les parties extrêmes en regard, de façon à former une chambre (38, 40)
- et de l'eau remplissant ladite chambre (38, 40).

2/ Laser à gaz selon la revendication 1, caractérisé en ce que les parties extrêmes (32, 33, 35, 36) en contact avec l'eau comportent des proéminences aplaties (55) s'avançant dans le volume de la chambre (38) de façon que la distance moyenne entre les plaques (2, 3) soit plus faible dans les chambres (38, 40) que dans le canal (51).

3/ Laser à gaz selon la revendication 1, caractérisé en ce que au moins une plaqué (2) comporte une proéminence arrondie (53) s'avançant dans le volume du canal (51).

4/ Laser à gaz selon la revendication 1, caractérisé en ce qu'il comporte un circuit de circulation (45 à 47, 49, 50) de l'eau contenue dans les chambres (39, 40), ce circuit étant relié aux chambres par des ouvertures (41 à 44) pratiquées dans les cloisons isolantes (37, 39).

5/ Laser à gaz selon la revendication 4, caractérisé en ce que le circuit comporte des moyens (48) pour refroidir l'eau en circulation.

**Patentansprüche**

1. Durch Kondensatorentladung angeregter Gaslaser mit
- zwei einander gegenüberliegenden Metallplatten, wobei jede Platte ein Mittelteil besitzt, das zwischen zwei Endteilen angeordnet ist, die ihm benachbart sind,
- zwei dielektrischen Elementen, die zwischen den Platten je auf einer Seite der Mittelteile angeordnet sind und mit den Endteilen in Berühren stehen, um so mit den Platten zwei parallele Kondensatoren zu bilden, wobei der zwischen den Mittelteilen und den dielektrischen Elementen enthaltene Raum einen Kanal (51) bildet, der entlang einer Achse angeordnet ist und ein aktives gasförmiges Milieu enthält, und wobei die mit dem aktiven Milieu in Berührung stehenden Mittelteile zwei Elektroden bilden,
- einem optischen Resonanzhohlraum, der entlang der Achse angeordnet ist und das aktive Milieu enthält,
- und einem Ladekreis, der aufweist
- einen Transformator, dessen Primärwicklung in Reihe mit einem Kondensator liegt und dessen Sekundärwicklungsenden jeweils mit einer der beiden Platten verbunden sind,
- eine elektrische Stromquelle, die den Kondensator laden kann,
- und Mittel, um die Entladung des Kondensators in die Primärwicklung zu steuern, wodurch in der Sekundärwicklung ein Induktionsstrom erzeugt wird, der die Kondensatoren laden kann, um eine elektrische Entladung zwischen den Elektroden zu erzeugen, die das aktive gasförmige Material dazu anregt, einen Laserstrahl zu bilden, dadurch gekennzeichnet, daß jedes dieelektrische Element
- eine isolierende Trennwand (37, 39), die senkrecht zu den Platten (2, 3) angeordnet ist und den Raum zwischen den sich gegenüberliegenden Endteilen umgibt, um eine Kammer (38, 40) zu bilden,
- und Wasser enthält, das diese Kammer (38, 40) füllt.

2. Gaslaser nach Anspruch 1, dadurch gekennzeichnet, daß die mit dem Wasser in Verbindung stehenden Endteile (32, 33, 35, 36) abgeflachte Vorsprünge (55) aufweisen, die in das Volumen der Kammer (38) so vorstehen, daß der mittlere Abstand zwischen den Platten (2, 3) in den Kammern (38, 40) kleiner ist als im Kanal (51).

3. Gaslaser nach Anspruch 1, dadurch gekennzeichnet, daß mindestens eine Platte (2) einen abgerundeten Vorsprung (53) aufweist, der in das Volumen des Kanals (51) hineinragt.

4. Gaslaser nach Anspruch 1, dadurch gekennzeichnet, daß er einen Kreis (45 bis 47, 49, 50) zum Umlauf des in den Kammern (38, 40) enthaltenen Wassers aufweist, wobei dieser Kreis mit den Kammern durch Öffnungen (41 bis 44) in den isolierenden Trennwänden (37, 39) verbunden ist.

5. Gaslaser nach Anspruch 4, dadurch gekennzeichnet, daß der Kreis Mittel (48) aufweist, um das zirkulierende Wasser abzukühlen.**En

**Claims**

1. A gas laser excited by a capacitor discharge, comprising:
- two metal plates which face each other, each plate comprising a middle portion situated between two end portions which are adjacent to it,
- two dielectric elements disposed between the plates on either side of the middle portions respectively and in contact with the end portions, so as to form with the plates two parallel capacitors, the interspace between the middle portions and the dielectric elements constituting a channel (51) disposed along an axis and containing a gaseous active medium, the middle portions in contact with the active medium forming respectively two electrodes,

- an optical resonance cavity disposed along said axis and containing the active medium,

- and a charging circuit comprising

- a transformer, the primary winding of which is connected in series with a capacitance and the ends of the secondary winding of which are respectively connected to the two plates,

- a source of electric current capable of charging the capacitance,

- and means for controlling the discharge of the capacitance into the primary winding, so as to create in the secondary winding an induced current capable of charging the capacitors in order to establish an electric discharge between the electrodes, this discharge exciting the gaseous active medium to form a laser beam, characterized in that each dielectric element comprises

- an insulating wall (37, 39) disposed perpendicularly to the plates (2, 3) and surrounding the room comprised between the facing end portions, so as to form a chamber (38, 40),

- and water filling said chamber (38, 40).

2. A gas laser according to claim 1, characterized in that the end portions (32, 33, 35, 36) in contact with the water comprise flat projections (55) protruding into the volume of the chamber (38) so that the mean distance between the plates (2, 3) is smaller in the chambers (38, 40) than in the channel (51).

3. A gas laser according to claim 1, characterized in that at least one plate (2) comprises a rounded projection (53) protruding into the volume of the channel (51).

4. A gas laser according to claim 1, characterized in that it comprises a circuit (45 to 47, 49, 50) for circulating the water contained in the chambers (38, 40), this circuit being connected to the chambers by openings (41 to 44) made into the insulating walls (37, 39).

5. A gas laser according to claim 4, characterized in that the circuit comprises means (48) for cooling the circulating water.